# EUROPEAN PATENT APPLICATION

(11) **EP 3 751 170 A1**
(43) Date of publication of application: **16.12.2020**
(21) Application number: 20020244.8
(22) Date of filing: 25.05.2020
(51) Int. Cl.: F16F 1/38

(54) **SILENT BLOCK**

(30) Priority: 14.06.2019 CZ 20190037
(71) Applicant: Trelleborg Bohemia, a.s., 500 03 Hradec Kralove (CZ)
(72) Inventor: Axman, Pavel, 549 54 Police nad Metuji (CZ); Blazek, Daniel, 500 12 Hradec Kralove 12 (CZ); Hloucal, Ales, 50401 Novy Bydzov (CZ); Lazak, Radek, 543 72 Rudnik u Vrchlabi (CZ); Ptacek, Jiri, 503 41 Hradec Kralove 7 (CZ); Stary, Premysl, 517 41 Kostelec nad Orlici (CZ); Tomasek, Jiri, 517 72 Jilovice (CZ)
(74) Representative: Andera, Jiri

(57) **Abstract**

The silent block comprises a pipe (2) around the circumference of which rubber (1) is arranged, a casing (4) being arranged on at least a substantial portion of the outer circumference of the rubber (1). The casing (4) is divided into at least two separate parts in the axial direction. On the contact surfaces between the casing (4) and rubber (1), at least one outer protrusion (5) is arranged on one of the contact surfaces that fits into at least one opposite outer recess (7) arranged in the other contact surface.

## Description

### Technical Field

The invention relates to a silent block comprising a pipe around the circumference of which a rubber is arranged, surrounded by a casing on the outer circumference of the rubber.

### Prior Art

Silent blocks belong to antivibration parts used e.g. in the automotive industry. Existing silent blocks (divided rubber springs) are rubber-metallic products with an outer pipe or divided outer casing. These silent blocks are used as flexible parts for the lugs of leaf springs, axle braces and other nodes of vehicle axes. The silent block is thrust into the leaf spring lug and its position results from the design of the shape geometry of the leaf spring and spring suspensions.

A silent block disclosed in the document DE 10 2011 013 678 comprises an outer casing of a tubular shape and an inner metallic insert to which rubber is attached by vulcanization in such a way that towards the casing axis, an assembly is formed comprising the outer casing-rubber-metallic insert-rubber composition. Inside the assembly, a pipe is firmly inserted that protrudes out of both the ends of the assembly and the pipe is fitted with spacer rings at the ends of the assembly. The casing comprises a longitudinal axial joint that enables biasing of the silent block before it is thrust into the leaf spring lug. To increase stiffness and bearing capacity of the silent block, more metallic inserts may be attached to the assembly by vulcanization.

A drawback of this design is production complexity due to attaching rubber by vulcanization to multiple parts (casing, metallic inserts), a complex production sequence, necessity to use exact steel or plastic spacer rings, higher weight, higher torsion stress of rubber. A casing with a longitudinal axial joint also requires a more complex structure of casing production mould.

Another existing structure of a silent block comprises a pipe with rubber attached to it by vulcanization along the pipe circumference. A casing is thrust onto the said assembly, the ends of the casing are fitted with a rim and bent towards the rubber.

A drawback of this structure is a complex production process, higher weight of the silent block and higher production costs.

An object of the invention is to design a silent block eliminating the drawbacks mentioned above, i.e. a silent block that can be produced using a simple production process, with low production costs and low weight. Another object is to design a silent block with easy control of axial and radial stiffness, with parts exposed to lower stress and with the possibility of a simple repair in case of a failure of the silent block.

### Disclosure of Invention

The said object is achieved through a silent block comprising a pipe around the circumference of which a rubber is arranged, and a casing being arranged on at least a substantial portion of the outer circumference of the rubber, according to the invention the principle of which is that in the axial direction, the casing is divided into at least two separate parts, wherein on the contact surfaces between the casing and rubber, at least one outer protrusion is arranged on one of the contact surfaces, that fits into at least one opposite outer recess arranged in the other contact surface.

An advantage of the silent block according to the invention is that the protrusions and recesses, in particular their quantity, locations, shape and sizes, can be used to control the axial and radial stiffness of the silent block, and thus to increase its bearing load capacity. The protrusions and recesses reduce the free area during deformation of the rubber. The protrusions and recesses also ensure proper positioning of the parts. The division of the casing into more parts facilitates the production process of the silent block wherein individual parts of the casing are fitted on the rubber without the necessity of additional fixation.

In a preferred embodiment of the silent block, an outer protrusion is arranged on the casing and an outer recess is arranged in the rubber.

An advantage of this embodiment is an increase of radial and axial stiffness of the silent block.

In a preferred embodiment of the silent block, the outer protrusion is a circumferential protrusion and the opposite outer recess thereto is a circumferential recess.

An advantage of this embodiment is an increase of radial and axial stiffness of the silent block.

In a preferred embodiment of the silent block, the casing is made of flexible material, especially of plastic.

An advantage of this embodiment is low stress of the spring lug or brace where the silent block is installed.

In a preferred embodiment of the silent block, a tubular shaped part is arranged between the rubber and the pipe all around the pipe circumference wherein on the contact surfaces between the shaped part and the rubber, on one of the contact surfaces, at least one inner protrusion is arranged that fits into at least one opposite inner recess arranged in the other contact surface.

An advantage of this embodiment with a shaped part is further radial and axial stiffening of the silent block.

In a preferred embodiment of the silent block, the inner protrusion is arranged on the shaped part and the inner recess is arranged in the rubber.

An advantage of this embodiment with a shaped part is still further radial and axial stiffening of the silent block.

In a preferred embodiment of the silent block, the inner protrusion is a circumferential protrusion and the opposite inner recess thereto is a circumferential recess.

An advantage of this embodiment with a shaped part is still further radial and axial stiffening of the silent block.

In a preferred embodiment of the silent block, the shaped part is made of sliding material.

An advantage of this embodiment is reduction of the torsional stress of the silent block rubber.

In a preferred embodiment of the silent block, the casing, or the shaped part comprises a shoulder at the ends of the rubber, extending towards the rubber.

An advantage of this embodiment is ensuring radial and axial stiffness of the silent block.

In a preferred embodiment of the silent block, the rubber is attached to the shaped part and/or to the casing and/or to the pipe by vulcanization.

An advantage of this embodiment is a still further increase of stiffness of the silent block.

### Brief Description of Drawings

The silent block according to this invention will be described in more detail with the use of examples of particular embodiments, schematically shown in the attached drawings.
Fig. 1 shows a sectional view of the arrangement of a silent block with a shaped part without rubber being attached to the casing and to the shaped part by vulcanization.
Fig. 2 shows a front view of the arrangement of the silent block of Fig. 1.
Fig. 3 shows a sectional view of the arrangement of a silent block with a shaped part with rubber attached to the shaped part by vulcanization.
Fig. 4 shows a sectional view of the arrangement of a silent block with a shaped part with rubber attached to the casing by vulcanization.
Fig. 5 is a sectional view of the arrangement of a silent block with a shaped part with rubber attached to the shaped part as well as to the casing by vulcanization.
Fig. 6 shows a sectional view of the arrangement of a silent block without a shaped part with rubber attached to the pipe by vulcanization.

### Description of preferred embodiments

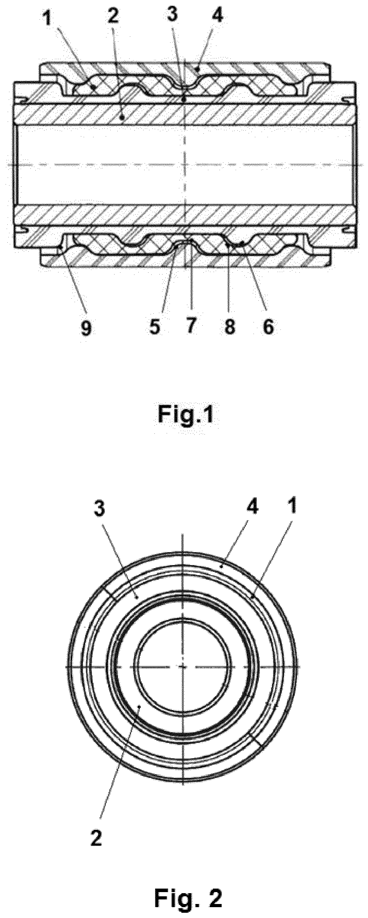

The silent block according to the embodiment of Fig. 1 and Fig. 2 comprises a pipe 2 around the circumference of which a tubular shaped part 3 is arranged. Around the shaped part 3, a rubber 1 is circumferentially arranged and on the outer circumference of the rubber 1 a casing 4 is arranged.

On the contact surfaces between the casing 4 and rubber 1, on the casing 4, three outer protrusions 5 are arranged that fit into three opposite outer recesses 7 arranged in the rubber 1. On the contact surfaces between the shaped part 3 and rubber 1, protrusions and recesses are also arranged in such a way that two inner protrusions 6 are arranged on the shaped part 3 that fit into two opposite inner recesses 8 arranged in the rubber 1. The protrusions 5,6 and recesses 7,8 according to the embodiment of Fig. 1 are circumferential, i.e. they extend around the entire circumference of the parts they are formed on. The number, size, shape and positions of the protrusions 5,6 and recesses 7,8 are governed by the required axial and radial stiffness of the silent block and are based on the design calculation of the silent block. The protrusions 5,6 and recesses 7,8 according to the embodiment of Fig. 1 have a conical shape. A skilled person will also imagine other shapes fulfilling the required function of ensuring radial and axial stiffening of the silent block.

The shaped part 3 comprises at both its ends, after the ends of the rubber 1, a shoulder 9 that extends towards the rubber 1. The shoulder 9 according to the embodiment of Fig. 1 is circumferential. The purpose of the shoulder 9 is to ensure axial stiffness of the silent block. Without the shoulder 9, the rubber 1 would recede laterally outside the casing 4 under load and the silent block would be softer. Implementing the shoulder 9 as part of the shaped part 3 eliminates an additional production step of installation of separate spacer rings used in the prior art.

The pipe 2 is thrust into the shaped part 3. Rubber 1 is fitted onto the shaped part 3 in such a way that after vulcanization, rubber 1 is cut in the axial direction and fitted onto the shaped part 3. Instead of cutting of the rubber 1, a longitudinal joint may be produced in the cavity of the vulcanizing mould of rubber 1 to interrupt the rubber 1 during vulcanization already. The casing 4 is divided in the axial direction into two equally sized separate parts, as shown in Fig. 2. Both the halves of the casing 4 are fitted on the rubber 1. The casing 4 holds on the rubber 1 thanks to a bias between the geometry of the rubber 1 and casing 4, which is also supported by the play between the engaging outer protrusions 5 and outer recesses 7. In the completed state of the silent block, there is a gap between the ends of the rubber 1 and the shoulder 9. Both the halves of the casing 4 of the completed silent block are not in a tight mutual contact. The distance between the halves of the casing 4 enables biasing of the silent block on its thrusting into the working position, e.g. into the leaf spring lug. In the working position of the silent block, the play between the protrusions 5,6 and the recesses 7,8 and the gap between the ends of the rubber 1 and the shoulder 9 is filled with compressed rubber 1.

In the embodiment of Fig. 1, rubber 1 is attached by vulcanization neither to the shaped part 3, nor to the casing 4. Rubber 1 that is not attached by vulcanization to the casing 4 reduces stressing of the leaf spring lug or another element where the silent block is installed. Rubber 1 that is not attached to the shaped part 3 by vulcanization reduces torsional stress of rubber. The shaped part 3 with the rubber 1 acts as a bearing enabling slippage between individual parts of the silent block. Without the rubber 1 attached by vulcanization, the protrusions 5,6 and recesses 7,8 are also used to center the rubber with respect to the shaped part 3 and casing 4, otherwise the rubber 1 with the casing 4 might freely axially move on the pipe 2, which is not desirable.

The silent block according to this embodiment is completely dismountable and enables easy replacement of damaged components. Compared to existing designs, the silent block according to the invention is characterized by simpler production as e.g. the processes of rubber vulcanization, thrusting of spacer rings onto the pipe etc. are eliminated. This is also associated with lower production costs. Compared to existing silent blocks, the inventive silent block has a lower weight.

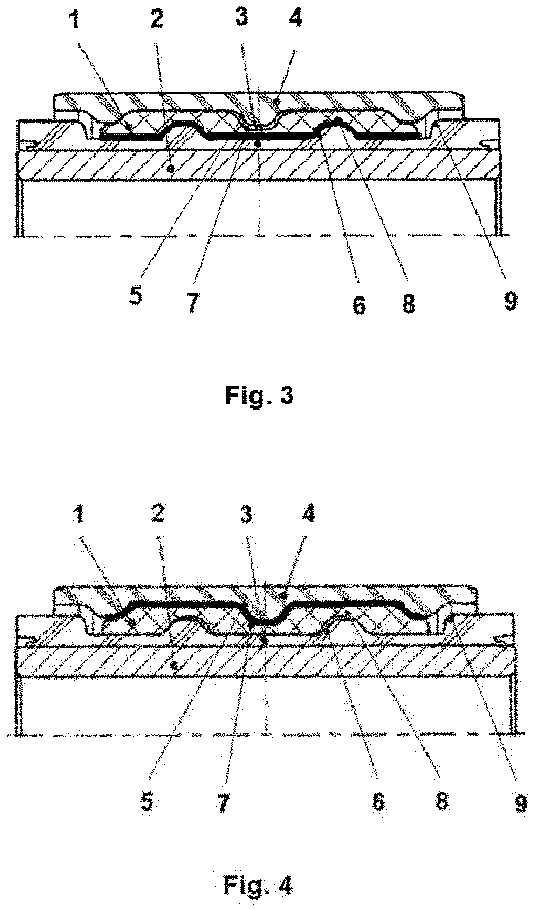

The embodiment of silent block according to Fig. 3 differs from the embodiment of Fig. 1 in that the rubber 1 is attached to the shaped part 3 by vulcanization. The vulcanization attachment supports further enhancement of stiffness of the silent block.

The embodiment of silent block according to Fig. 4 differs from the embodiment of Fig. 1 in that the rubber 1 is attached to the casing 4 by vulcanization. The vulcanization attachment supports further enhancement of stiffness of the silent block.

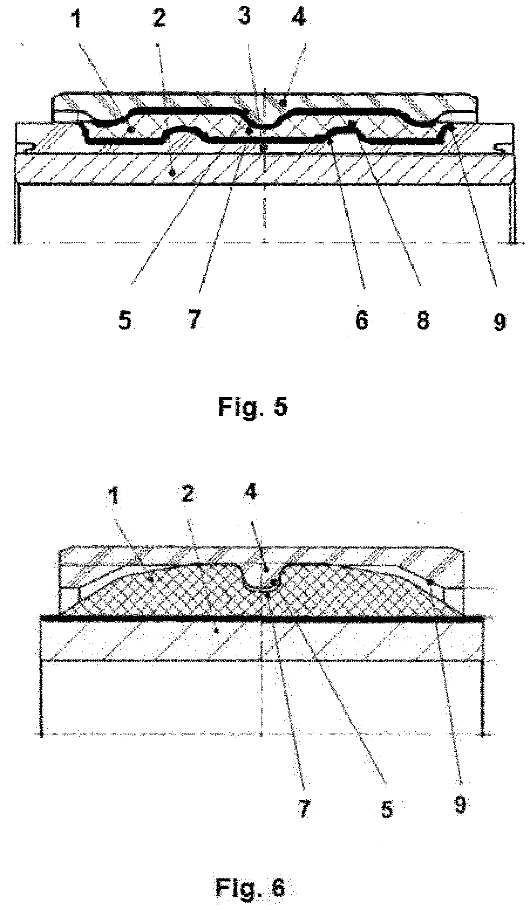

The embodiment of silent block according to Fig. 5 differs from the embodiment of Fig. 1 in that the rubber 1 is attached both to the shaped part 3 and to the casing 4 by vulcanization. The vulcanization attachment supports further enhancement of stiffness of the silent block.

In the embodiment of Fig. 6, the silent block does not comprise the shaped part 3, and the rubber 1 is attached to the pipe 2 by vulcanization. On the contact surfaces between the casing 4 and rubber 1, on the casing 4, one outer protrusion 5 is arranged that fits into one opposite outer recess 7 arranged in the rubber 1. The outer protrusion 5, and the outer recess 7, are circumferential, i.e. they extend around the entire circumference of the parts they are formed on. The casing 4 comprises at both its ends, near the ends of the rubber 1, a shoulder 9 that extends towards the rubber 1. The shoulder 9 is circumferential. The purpose of the shoulder 9 is to ensure axial stiffness of the silent block. Without the shoulder 9, the rubber 1 would recede laterally outside the casing 4 under load and the silent block would be softer. The implementation of the shoulder 9 as part of the casing 4 eliminates additional production step of fitting the end of the casing 4 with a rim and bending it towards the rubber 1.

### List of reference numbers

- 1: rubber
- 2: pipe
- 3: shaped part
- 4: casing
- 5: outer protrusion
- 6: inner protrusion
- 7: outer recess
- 8: inner recess
- 9: shoulder

## Claims

1. A silent block comprising a pipe (2) around the circumference of which a rubber (1) is arranged, and a casing (4) being arranged on at least a substantial portion of the outer circumference of the rubber (1), **characterized in that** in the axial direction, the casing (4) is divided into at least two separate parts, wherein on contact surfaces between the casing (4) and rubber (1), at least one outer protrusion (5) is arranged on one of the contact surfaces, that fits into at least one opposite outer recess (7) arranged in the other contact surface.

2. The silent block according to claim 1, **characterized in that** the outer protrusion (5) is arranged on the casing (4) and the outer recess (7) is arranged in the rubber (1).

3. The silent block according to claim 1 or 2, **characterized in that** the outer protrusion (5) is a circumferential protrusion and the opposite outer recess (7) thereto is a circumferential recess.

4. The silent block according to any of claims 1 to 3, **characterized in that** the casing (4) is made of flexible material, especially of plastic.

5. The silent block according to any of claims 1 to 4, **characterized in that** a tubular shaped part (3) is arranged between the rubber (1) and the pipe (2) all around the pipe (2) circumference, wherein on the contact surfaces between the shaped part (3) and the rubber (1), on one of the contact surfaces, at least one inner protrusion (6) is arranged, that fits into at least one opposite inner recess (8) arranged in the other contact surface.

6. The silent block according to claim 5, **characterized in that** the inner protrusion (6) is arranged on the shaped part (3) and the inner recess (8) is arranged in the rubber (1).

7. The silent block according to claim 5 or 6, **characterized in that** the inner protrusion (6) is a circumferential protrusion and the opposite inner recess (8) thereto is a circumferential recess.

8. The silent block according to any of claims 5 to 7, **characterized in that** the shaped part (3) is made of sliding material.

9. The silent block according to any of claims 1 to 8, **characterized in that** the casing (4) or the shaped part (3) comprises, at the ends of the rubber (1), a shoulder (9) extending towards the rubber (1).

10. The silent block according to any of claims 1 to 9, **characterized in that** the rubber (1) is attached to the shaped part (3) and/or the casing (4) and/or the pipe (2) by vulcanization.
